Europäisches Patentamt

**European Patent Office**

Office européen des brevets

(11) Veröffentlichungsnummer: **0 295 252**
B1

(12) EUROPÄISCHE PATENTSCHRIFT

(45) Veröffentlichungstag der Patentschrift:
10.01.90

(51) Int. Cl.⁴: **B 60 S 1/36**

(21) Anmeldenummer: 87901356.3

(22) Anmeldetag: 26.02.87

(86) Internationale Anmeldenummer:
**PCT/DE 87/00071**

(87) Internationale Veröffentlichungsnummer:
**WO 87/05269 (11.09.87 Gazette 87/20)**

(54) WISCHVORRICHTUNG FÜR SCHEIBEN VON KRAFTFAHRZEUGEN.

(30) Priorität: 27.02.86 DE 3606367

(43) Veröffentlichungstag der Anmeldung:
21.12.88 Patentblatt 88/51

(45) Bekanntmachung des Hinweises auf die Patenterteilung:
10.01.90 Patentblatt 90/2

(84) Benannte Vertragsstaaten:
DE FR GB IT

(56) Entgegenhaltungen:
DE-A- 2 430 831
DE-A- 3 447 438
DE-C- 3 427 933

(73) Patentinhaber: ROBERT BOSCH GMBH, Postfach 50,
D-7000 Stuttgart 1 (DE)

(72) Erfinder: KÜHBAUCH, Gerd, Bützengrabenweg 6,
D-7582 Bühlertal (DE)

ACTORUM AG

## Beschreibung

*Stand der Technik*

Die Erfindung geht aus von einer Wischvorrichtung nach der Gattung des Hauptanspruchs. Es ist schon eine solche Wischvorrichtung bekannt (DE-C-22 15 307), bei der das Zahnrad an dem Pendelhebel gelagert ist und direkt mit der Verzahnung kämmt. Dabei ist auch die zum Schubkurbelgetriebe gehörende Kurbel fest mit diesem Zahnrad verbunden. Diese beiden Konstruktionskriterien führen zu einem unveränderbaren Abstand zwischen der Kurbel-Drehachse und der Pendelachse, so dass für jedes angestrebte Wischfeld ein völlig neues Wischvorrichtungs-Übersetzungsgetriebe ausgelegt werden muss.

Weiterhin ist es bekannt, das Zahnrad in der Pendelachse gestellfest zu lagern (DE-C-10 66 890) und eine mit diesem kämmende, konvex gekrümmte Zahnstange an dem Zahnrad vorbeizuführen. Diese Wischvorrichtung unterscheidet sich jedoch vom Konstruktionsprinzip her gesehen nicht von der oben schon geschilderten, bekannten Wischvorrichtung, so dass die dort beschriebenen Nachteile auch hier vorhanden sind.

*Vorteile der Erfindung*

Die erfindungsgemässe Wischvorrichtung mit den kennzeichnenden Merkmalen des Hauptanspruchs hat demgegenüber den Vorteil, dass das am Pendelhebel gelagerte Zahnrad lediglich Zwischenradfunktion hat, so dass die Übersetzung zwischen dem am Führungselement gelagerten zweiten Zahnrad und der zur Pendelachse konzentrischen Verzahnung erfolgt. Durch den je nach Kundenforderung längenanpassbaren Zahnriemen wird eine Auflösung der starren Konstruktionskriterien erreicht, so dass Änderungen des Übersetzungsverhältnisses durch Abstimmung der Zähnezahl des zweiten Zahnrades und entsprechende Längenanpassung des Zahnriemens erreicht werden können. Weiter ergibt sich durch die Anordnung des Zahnriemens ein geräuscharmer, weicher Lauf des Wischvorrichtungs-Untersetzungsgetriebes.

Durch die in den Unteransprüchen aufgeführten Massnahmen sind vorteilhafte Weiterbildungen und Verbesserungen der im Hauptanspruch angegebenen Wischvorrichtung möglich. Besonders vorteilhaft ist es, die Verzahnung an der Seitenwand eines topfförmigen, gestellfesten Gehäuses anzuordnen, dessen Boden von einer pendelnd angetriebenen, die Pendelachse aufweisenden Welle durchdrungen ist, weil sich dadurch ein besonders kostengünstiges Getriebe ergibt.

*Zeichnung*

Ein Ausführungsbeispiel der Erfindung ist in der Zeichnung dargestellt und in der nachfolgenden Beschreibung näher erläutert. Es zeigen:

Figur 1 eine Draufsicht auf eine Windschutzscheibe eines Kraftfahrzeuges mit einer dieser zugeordneten Wischvorrichtung,

Figur 2 eine Prinzipskizze der Wischvorrichtung gemäss Figur 1, bei der sich der Wischarm in der einen, in Figur 1 gezeigten Umkehrlage befindet,

Figur 3 die Wischvorrichtung gemäss Figur 2, bei der sich der Wischarm in einer anderen Betriebsstellung befindet,

Figur 4 die Wischvorrichtung gemäss Figur 2, bei der sich der Wischarm in einer weiteren Betriebsstellung befindet,

Figur 5 eine Draufsicht auf ein zur Wischvorrichtung gehörendes Übersetzungsgetriebe in gegenständlicher Darstellung,

Figur 6 einen Schnitt durch das Getriebe entlang der Linie VI-VI in Figur 5, und

Figur 7 eine Teilansicht eines zum Getriebe gemäss den Figuren 5 und 6 gehörenden Zahnriemens.

*Beschreibung des Ausführungsbeispiels*

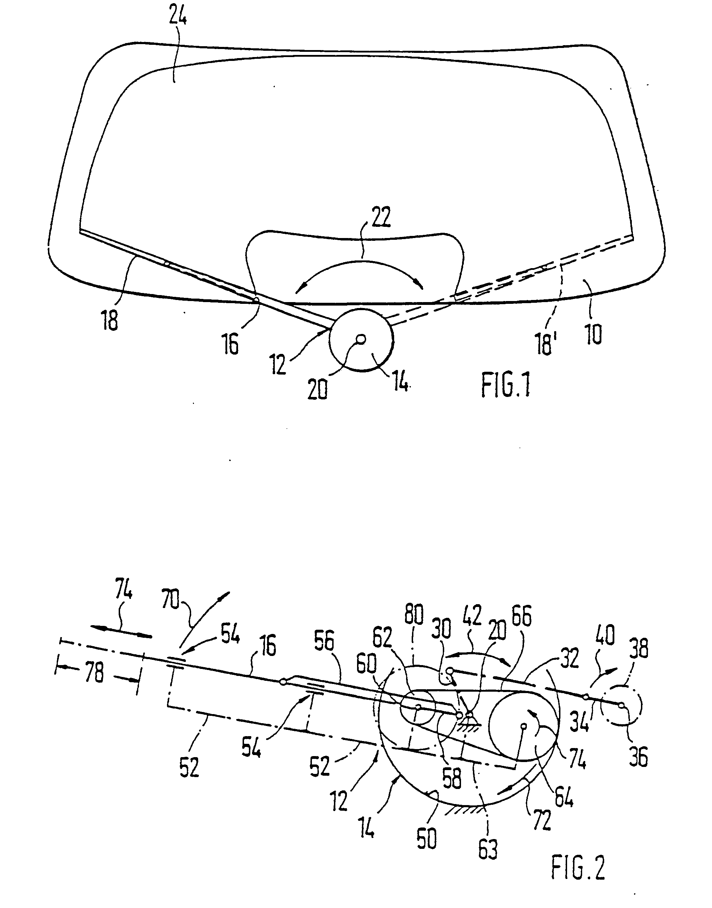

Einer in Figur 1 dargestellten Windschutzscheibe 10 ist eine Wischvorrichtung 12 zugeordnet. Die Wischvorrichtung weist ein Übersetzungsgetriebe 14 auf, das einen Wischarm 16 pendelnd antreibt. Dabei pendelt der Wischarm zusammen mit einem an seinem freien Ende befestigten Wischblatt 18 um eine zum Übersetzungsgetriebe 14 gehörende Pendelachse 20 entsprechend einem in Figur 1 dargestellten Doppelpfeil 22 zwischen zwei Umkehrlagen. Die eine Umkehrlage ist in Figur 1 durch ausgezogene Linienführung dargestellt, während die andere Umkehrlage gestrichelt gezeichnet und mit 18' bezeichnet ist. Während der Pendelbewegung wird dem auf der wischenden Scheibe 10 aufliegenden Wischblatt 18 eine zur Pendelachse 20 radial verlaufende Schiebebewegung mitgeteilt, so dass das von dem Wischblatt 18 bestrichene Wischfeld 24 eine von einem Kreissegment abweichende Form hat. Derart arbeitende Wischvorrichtungen werden neuerdings dort verwendet, wo ein einziger Scheibenwischer ein möglichst grosses Wischfeld auf der zu wischenden Scheibe überstreichen soll. Insbesondere sollen auch weit von der Pendelachse entfernte Scheiben-Eckbereiche überstrichen werden. Unabhängig davon ist es jedoch denkbar, derartig arbeitende Wischvorrichtungen auch dann einzusetzen, wenn einer Kraftfahrzeugscheibe mehrere, insbesondere zwei nebeneinander angeordnete Wischvorrichtungen zugeordnet sind. Dabei wird man die Übersetzungsgetriebe dieser beiden Wischvorrichtungen so auslegen, dass jedes der zu ihnen gehörenden Wischblätter ein als optimal anzusehendes Wischfeld überstreicht.

Bei der in Figur 2 dargestellten Prinzipskizze der Wischvorrichtung 12 gemäss Figur 1 befindet sich der Wischarm 16 in der in Figur 1 mit ausgezogenen Linien dargestellten Betriebsstellung. Das Übersetzungsgetriebe ist mit 14 in Figur 2 detailliert dargestellt. Wie Figur 2 weiter zeigt, ist die Pendelachse 20 durch eine gestellfest gelagerte Pendelwelle gebildet. An der Pendelwelle 20 ist ein Schwinghebel 30 befestigt, an dessen freiem Ende das eine Ende einer Schubstange 32 angelenkt ist. Das andere Ende der Schubstange 32 ist gelenkig mit einer Kurbel 34 verbunden, die auf einer Abtriebswelle 36 einer Antriebseinheit 38 befestigt ist. Wenn die Abtriebswelle 36 der Antriebseinheit 38 in Richtung des Pfeiles 40 umläuft, wird die Kurbel 34 mitgenommen und dem Schwinghebel 30 über die Schubstange 32 eine durch einen Doppelpfeil 42 angedeutete Schwingbewegung versetzt. Die mit der Pendelwelle 20 fest verbundene Schwinge 30 nimmt dabei die Pendelwelle 20 mit. Der an der Pendelwelle 20 wirksame Pendelwinkel stimmt mit dem Schwenkwinkel des Wischerarms 16 bzw. des Wischblatts 18 überein. Das Übersetzungsgetriebe 14 ist wie folgt aufgebaut: Es hat eine zur Pendelwelle 20 konzentrische, gestellfeste Verzahnung 50, die der Pendelwelle 20 zugewandt ist. An der Pendelwelle 20 ist ein Führungselement 52 befestigt, das in den Figuren 2 bis 4 strichpunktiert dargestellt ist. Das Führungselement 52 weist zwei Gleitlager 54 auf, die, bezogen auf die Pendelwelle 20, mit Abstand voneinanderliegend radial angeordnet sind. Die Gleitlager 54 dienen zur Aufnahme des Wischerarms 16, der in den Gleitlagern 54 in seiner Längsrichtung verschiebbar ist. An dem Wischerarm 16 ist ein Ende einer Schubstange 56 angelenkt, deren anderes Ende mit einer Steuerkurbel 58 gelenkig verbunden ist. Die Steuerkurbel 58 ist an einem in dem Führungselement 52 drehbar gelagerten Zapfen 60 befestigt. Weiter ist mit dem Zapfen 60 ein Ritzel 62 fest verbunden. Das Führungselement 52 ist mit einem Pendelhebel 63 versehen, der sich über die Pendelwelle 20 hinaus erstreckt und an dem ein Zahnrad 64 drehbar gelagert ist, welches mit der Verzahnung 50 indirekt zusammenarbeitet. Die beiden Zahnräder 62 und 64 sind durch einen in Figur 7 abschnittsweise dargestellten, endlosen Zahnriemen 66 miteinander wirkverbunden, welcher beidseitig eine Verzahnung 68 bzw. 70 aufweist. Da der Zahnriemen 66 endlos ausgebildet ist, ergibt sich somit eine innere und äussere Verzahnung des Zahnriemens. Der Zahnriemen 66 ist so um die beiden Zahnräder 62 und 64 gelegt, dass er diese teilweise umschlingt und mit den Verzahnungen der Zahnräder 62 und 64 in Eingriff steht. Die Anordnung des Zahnrades 64 ist so getroffen, dass die Aussenverzahnung des Zahnriemens 66 mit der gestellfesten Verzahnung 50 kämmt. Die Drehachsen der Zahnräder 62, 64 liegen parallel zur Achse der Pendelwelle 20.

Das Übersetzungsverhältnis im Übersetzungsgetriebe 14 ergibt sich aus der Zähnezahl des Zahnrades oder Ritzels 62 und der wirksamen Zähnezahl der Verzahnung 50. Das Zahnrad 64 hat auf die Übersetzung lediglich Einfluss als Zwischenrad, welches das Übersetzungsverhältnis nicht bestimmt.

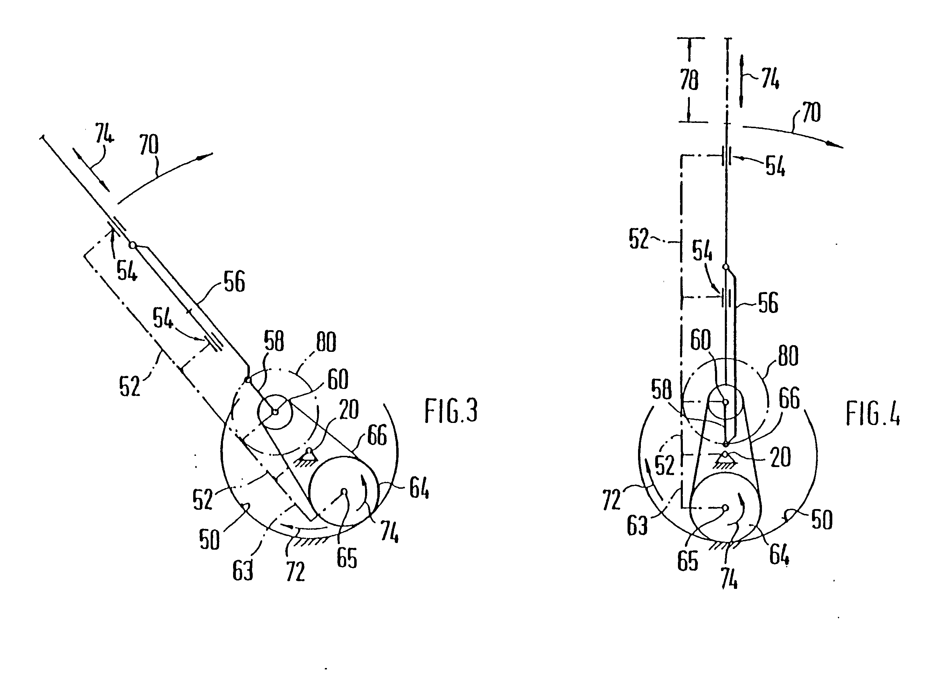

Im folgenden wird der Betrieb der Wischvorrichtung anhand der Figuren 2 bis 4 erläutert. Dabei erfolgt der Antrieb der Wischvorrichtung durch die Antriebsvorrichtung 38 so, dass die Abtriebswelle 36 in Richtung des Pfeiles 40 umläuft und der Wischerarm aus der in Figur 2 dargestellten Pendel-Umkehrlage in Richtung des Pfeiles 70 schwenkt. Mit dem nun einsetzenden Betrieb der Antriebseinheit 38 schwingt also der Wischerarm 16 in Richtung des Pfeiles 70, wobei er durch das mit der Pendelwelle 20 fest verbundene Führungselement 52 mitgenommen wird. Mit dem Führungselement 52 wird aber auch der Pendelhebel 63 in Richtung des Pfeiles 72 geschwenkt. Dabei wälzt sich das Zahnrad 64 in dem mit der Verzahnung 50 in Eingriff stehenden Zahnriemen 66 ab, wobei es sich in Richtung des Pfeiles 74 dreht. Diese Bewegung wird über den Zahnriemen 66 auf das zweite Zahnrad 62 bzw. auf den Zapfen 60 übertragen, von wo aus die Bewegung über die fest mit dem Zapfen 60 verbundene Kurbel 58 auf die Schubstange 56 gelangt. Da die Kurbel 58 und die Schubstange 56 ein Schubkurbelgetriebe bilden, wird nun dem Wischerarm 16 eine, bezogen auf die Pendelwelle 20, radial nach aussen gerichtete Schiebebewegung mitgeteilt, die in der einen Richtung des Doppelpfeiles 75 erfolgt. Die Übersetzung in dem Getriebe 14 ist so gewählt, dass diese Schiebebewegung zum Stillstand kommt, wenn der Schwenkwinkel des Wischerarms 16 — bezogen auf die in Figur 2 dargestellte Umkehrlage — eine vorbestimmte Grösse erreicht hat. Dies ist im Ausführungsbeispiel der Fall, wenn der Wischerarm 16 zum linken oberen Endbereich der Scheibe 10 weist. Die Kurbel 58 hat dann in dieser in Figur 3 dargestellten Betriebslage eine halbe Umdrehung ausgeführt. Die Grösse der Längsverschiebung des Wischerarms 16 ist in Figur 2 mit 78 bezeichnet. Sie entspricht dem Durchmesser des Flugkreises 80, auf dem das Gelenk zwischen Kurbel 58 und Schubstange 56 umläuft. Wenn nun eine weitergehende Schwenkung des Wischerarms 16 erfolgt (in Figur 3 ebenfalls durch den Pfeil 70 dargestellt), wird der Wischerarm 16 mit Hilfe des Schubkurbelgetriebes 58, 56 wieder nach innen gezogen (Doppelpfeil 74), bis er die in Figur 4 gezeigte Stellung einnimmt. In dieser Position hat die Kurbel 58 eine volle Umdrehung zurückgelegt. Der Wischerarm 16 bzw. das an diesem befestigte Wischblatt 18 sind um ein Mass 78 zur Pendelwelle gezogen worden, das ebenfalls wieder dem Durchmesser des Flugkreises 80 entspricht.

Es ist klar, dass bei weiterer Pendelbewegung des Wischerarms 16 in Richtung des Pfeiles 70 in Figur 4 sich die oben geschilderten Bewegungsabläufe wiederholen, bis sich der Wischerarm 16 und das an diesem befestigte Wischblatt 18 in der in Figur 1 gestrichelt dargestellten und mit 18' bezeichneten Position befindet. Dies gilt auch bei der Rück-Pendelbewegung (Doppelpfeil 22 in Figur 1).

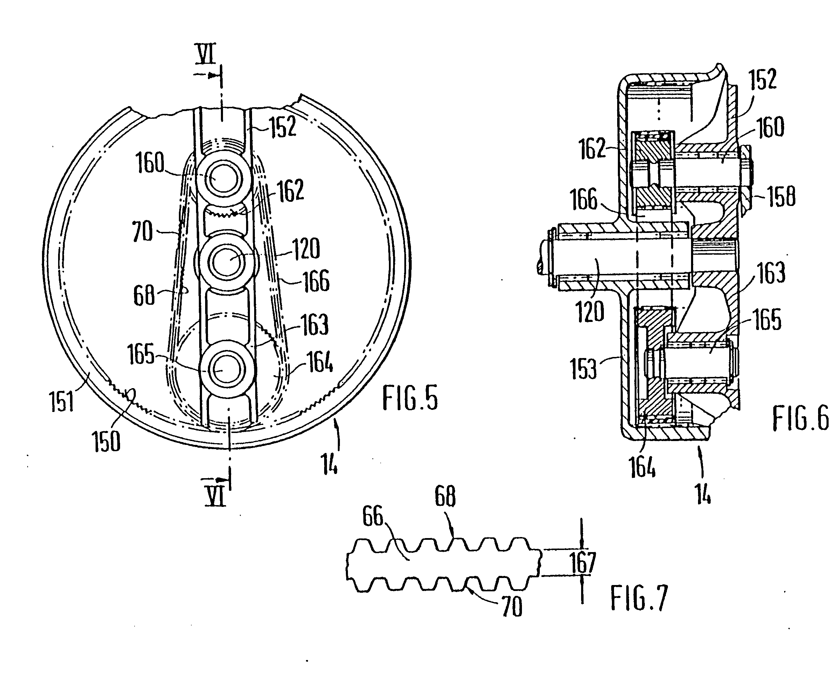

In den Figuren 5 und 6 ist das Wischvorrichtungs-Übersetzungsgetriebe 14 gegenständlich dargestellt. Seine momentane Betriebsstellung entspricht der in Figur 4 dargestellten Betriebsstellung. Dabei sind alle in den Figuren 2 bis 4 skizzenhaft dargestellten Bauteile mit Bezugszahlen versehen worden, die um die Zahl 100 höher liegen als die in den Figuren 2 bis 4 verwendeten Bezugszahlen. Aus den Figuren 5 und 6 ist ersichtlich, dass die zur Pendelwelle 120 konzentrische Verzahnung 150 an der Seitenwand eines topfförmigen, gestellfesten Gehäuses 151 angebracht ist. Die Pendelwelle 120 durchdringt dabei den Boden 153 des topfförmigen Gehäuses und ist in diesem gelagert. Es ergibt sich zwangsläufig aus dem schon vorher Gesagten, dass das Gehäuse 151, 153 gestellfest angeordnet ist. Weiter zeigt insbesondere die Figur 6, dass das am Führungselement 152 gelagerte Zahnrad 162 auf einem im Führungselement 152 drehbar gelagerten Zapfen 160 sitzt, welcher beidseitig über das Führungselement 152 hinausragt. An dem einen Ende des Drehzapfens 160 ist das Zahnrad 162 befestigt, während mit dem anderen Ende des Drehzapfens 160 die umlaufende Kurbel 158 fest verbunden ist. Auch das andere Zahnrad 164 ist auf einem Drehzapfen 165 befestigt, der drehbar in dem Pendelhebel 163 gelagert ist. Der endlose Zahnriemen 166 umschlingt die beiden Zahnräder 162, 164, wobei seine Innenverzahnung 68 mit den beiden Zahnrädern in Eingriff steht. Die Aussenverzahnung 70 des Zahnriemens 166 greift in die Verzahnung 150 der Gehäusewand 151 ein. Die Anordnung des Drehzapfens 165 und damit des Zahnrades 164 ist so getroffen, dass der Abstand zwischen dem Kopfkreis der Verzahnung 150 und dem Kopfkreis des Zahnrades 164 auf die Gurtdicke 167 des Zahnriemens 166 abgestimmt ist (Figur 7).

Insbesondere aus den Figuren 5 und 6 wird deutlich, dass die Positionierung des Drehzapfens 160 in weiten Grenzen variabel ist und bestimmten konstruktiven Forderungen angepasst werden kann. Wesentlich ist lediglich, dass die Länge des Zahnriemens 166 den sich ergebenden Gegebenheiten angepasst wird. So können beispielsweise die Achsenabstände der beiden Drehzapfen 160, 165 variiert werden. Auch kann es sich aufgrund bestimmter Forderungen als vorteilhaft erweisen, wenn zumindest einer der beiden Drehzapfen 160 bzw. 165 neben eine Radiale gelegt wird, welche die Pendelachse der Pendelwelle 120 schneidet und darüber hinaus in der Fluchtachse der Gleitlager 54 des Führungselements 52 bzw. 152 liegt.

**Patentansprüche**

1. Wischvorrichtung für Scheiben (10) von Kraftfahrzeugen, mit einem Wischerarm (16), der an einem pendelnd angetriebenen Führungselement (52) mittels Schubkurbelgetriebes (56, 58) radial zur Pendelachse (20, 120) verschiebbar geführt ist, an seinem freien Ende ein auf der zu wischenden Scheibe (10) angelegtes Wischblatt (18) trägt, wobei das Führungselement (52) einen über die Pendelachse (20, 120) hinausragenden Pendelhebel (63, 163) aufweist, an dem ein Zahnrad (64, 164) drehbar gelagert ist, dessen Drehachse (65, 165) parallel zur Pendelachse (20, 120) liegt und das Zahnrad (64, 164) mit einer gestellfesten, zur Pendelachse (20, 120) konzentrischen Verzahnung (50, 150) zusammenwirkt, dadurch gekennzeichnet, dass das Zahnrad (64 bzw. 164) von einem beidseitig ein Zahnprofil (68, 70) aufweisenden Zahnriemen (66 bzw. 166) teilweise umschlungen ist, dessen eines, äusseres Zahnprofil (70) mit der gestellfesten Verzahnung (50 bzw. 150) und dessen andere, innere Verzahnung (68) mit dem ersten Zahnrad (64 bzw. 164) kämmen und die innere Verzahnung (68) weiter mit einem am Führungselement (52 bzw. 152) drehbar gelagerten, von dem Zahnriemen (66 bzw. 166) teilweise umschlungenen zweiten Zahnrad (62 bzw. 162) in Eingriff steht, das mit der zum Schubkurbelgetriebe (56, 58) gehörenden Kurbel (58) fest verbunden ist.

2. Wischvorrichtung nach Anspruch 1, dadurch gekennzeichnet, dass die Verzahnung (50 bzw. 150) an der Seitenwand (151) eines topfförmigen, gestellfesten Gehäuses (151, 153) angeordnet ist, dessen Boden (153) von einer pendelnd angetriebenen, die Pendelachse aufweisenden Welle (20, 120) durchdrungen ist.

3. Wischvorrichtung nach Anspruch 2, dadurch gekennzeichnet, dass die Pendelwelle (120) in dem Boden (153) des Gehäuses pendelbar gelagert ist.

4. Wischvorrichtung nach einem der Ansprüche 1 bis 3, dadurch gekennzeichnet, dass das zweite Zahnrad (62 bzw. 162) fest mit einem Ende eines im Führungselement (52 bzw. 152) gelagerten, diese durchdringenden Wellenzapfens (160) verbunden ist und dass an dem anderen Ende des Wellenzapfens (160) die Kurbel (158) befestigt ist.

5. Wischvorrichtung nach den Ansprüchen 1 bis 4, dadurch gekennzeichnet, dass der Abstand zwischen dem Kopfkreis der Verzahnung (150) und dem Kopfkreis des ersten Zahnrades (164) auf die Gurtdicke (167) des Zahnriemens (66) abgestimmt ist.

6. Wischvorrichtung nach den Ansprüchen 1 bis 5, dadurch gekennzeichnet, dass zumindest eine der Drehachsen der Zahnräder (62, 64 bzw. 162, 164) neben einer Radialen liegt, welche ausgehend von der Führung (54) des Wischerarms (16) die Pendelachse (20) schneidet.

**Claims**

1. Wiper device for screens (10) of motor vehicles, with a wiper arm (16) which, by means of a slider crank mechanism (56, 58), is displaceably guided radially relative to the pendulum axle (20, 120) on a guide element (52) driven in a pendulum motion and which, on its free end, carries a wiper blade (18) laid against the screen (10) to be wiped, the guide element (52) having a pendulum lever (63, 163) which projects beyond the pendulum axle (20, 120) and on which is mounted rotatably a gear wheel (64, 164), the axis of rotation (65, 165) of which is parallel to the pendulum axle (20, 120), the gear wheel (64, 164) interacting with a toothing (50, 150) fixed relative to the frame and concentric relative to the pendulum axle (20, 120), characterized in that the gear (64 or 164) has looping partially round it a toothed belt (66 or 166) which has a toothed profile (68, 70) on both sides, one, external toothed profile (70) of which meshes with the toothing (50 or 150) fixed relative to the frame and the other, internal toothing (68) of which meshes with the first gear wheel (64 or 164), the internal toothing (68) furthermore being in engagement with a second gear wheel (62 or 162) which is mounted rotatably on the guide element (52 or 152) and round which the toothed belt (66 or 166) is partially looped and which is connected firmly to the crank (58) belonging to the slider crank mechanism (56, 58).

2. Wiper device according to Claim 1, characterized in that the toothing (50 or 150) is arranged on the side wall (151) of a pot-shaped housing (151, 153) which is fixed relative to the frame and the bottom (153) of which has passing through it a shaft (20, 120) driven in a pendulum motion and having the pendulum axle.

3. Wiper device according to Claim 2, characterized in that the pendulum shaft (120) is mounted in an oscillating manner in the bottom (153) of the housing.

4. Wiper device according to one of Claims 1 to 3, characterized in that the second gear wheel (62 or 162) is connected firmly to one end of a shaft journal (160) mounted in the guide element (52 or 152) and passing through this, and in that the crank (158) is fastened to the other end of the shaft journal (160).

5. Wiper device according to Claims 1 to 4, characterized in that the distance between the tip circle of the toothing (150) and the tip circle of the first gear wheel (164) is matched to the band thickness (167) of the toothed belt (66).

6. Wiper device according to Claims 1 to 5, characterized in that at least one of the axes of rotation of the gear wheels (62, 64 or 162, 164) is located next to a radial line which, starting from the guide (54) of the wiper arm (16), intersects the pendulum axis (20).

**Revendications**

1. Essuie-glace pour pare-brise (10) de véhicules automobiles, comportant un bras d'essuie-glace (16) qui est guidé en coulissement, radialement par rapport à l'axe pendulaire (20, 120) par un élément de guidage (52), entraîné, par une transmission à manivelle de poussée (56, 58), et dont l'extrémité libre porte un balai d'essuie-glace (18) destiné à essuyer le pare-brise (10), l'élément de guidage (52) comportant le levier à mouvement pendulaire (63, 163) qui dépasse de l'axe à mouvement pendulaire (20, 120), et sur lequel est monté à rotation un pignon denté (64, 164) dont l'axe de rotation (65, 165) est parallèle à l'axe à mouvement pendulaire (20, 120) et le pignon denté (64, 164) coopère avec une denture (50, 150) solidaire du châssis, concentrique à l'axe à mouvement pendulaire (20, 120), essuie-glace caractérisé en ce que le pignon denté (64, 164) est entouré partiellement par une courroie dentée (66, 166) ayant sur ses deux faces un profil denté (68, 70), courroie dont un profil denté extérieur (70) engrène avec la denture solidaire du châssis (50, 150) et dont l'autre denture, intérieure (68), engrène avec le premier pignon denté (64, 164) et dont la denture interne (68) est, en outre, montée à rotation sur un élément de guidage (52, 152), engrène avec le second pignon denté (62, 162) partiellement entouré par la courroie dentée (66, 166), et qui est reliée solidairement à la manivelle (58) de la transmission à vilebrequin de poussée (56, 58).

2. Essuie-glace selon la revendication 1, caractérisé en ce que la denture (50, 150) est prévue sur la paroi latérale (151) d'un boîtier (151, 153) en forme de pot, solidaire du châssis, dont le fond (153) est traversé par un arbre (20, 120) entraîné de manière pendulaire et portant l'axe d'un mouvement pendulaire.

3. Essuie-glace selon la revendication 2, caractérisé en ce que l'arbre à mouvement pendulaire (120) est monté pour un mouvement pendulaire dans le fond (153) du boîtier.

4. Essuie-glace selon l'une des revendications 1 à 3, caractérisé en ce que le second pignon denté (62, 162) est monté solidairement à une extrémité d'un élément d'arbre (160) monté dans l'élément de guidage (52, 152) qu'il traverse et en ce que l'autre extrémité de l'élément d'arbre (160) porte la manivelle (158).

5. Essuie-glace selon les revendications 1 à 4, caractérisé en ce que l'intervalle entre le cercle extérieur de la denture (150) et le cercle extérieur du premier pignon denté (164) est choisi en fonction de l'épaisseur (167) de la courroie dentée (66).

6. Essuie-glace selon les revendications 1 à 5, caractérisé en ce qu'au moins l'un des axes de rotation des pignons dentés (62, 64 ou 162, 164) se trouve à côté d'un rayon qui, partant du moyen de guidage (54) du bras d'essuie-glace (16), coupe l'axe à mouvement pendulaire (20).

FIG.1

FIG.2

FIG.4

FIG.3

FIG.5

FIG.6

FIG.7